Europäisches Patentamt

European Patent Office

Office européen des brevets

(19)

(11) Veröffentlichungsnummer : **0 341 452 B1**

## (12) EUROPÄISCHE PATENTSCHRIFT

(45) Veröffentlichungstag der Patentschrift :
**19.08.92 Patentblatt 92/34**

(51) Int. Cl.$^5$ : **A01F 15/14, A01F 15/08**

(21) Anmeldenummer : **89106881.9**

(22) Anmeldetag : **18.04.89**

(54) **Rundballen.**

(30) Priorität : **11.05.88 DE 3816189**

(43) Veröffentlichungstag der Anmeldung :
**15.11.89 Patentblatt 89/46**

(45) Bekanntmachung des Hinweises auf die
Patenterteilung :
**19.08.92 Patentblatt 92/34**

(84) Benannte Vertragsstaaten :
**DE FR GB**

(56) Entgegenhaltungen :
**EP-A- 0 126 278**
**FR-A- 2 457 636**
**GB-A- 2 003 716**
**US-A- 4 677 807**

(73) Patentinhaber : **GREENLAND GMBH & CO. KG**
**Erwin-Dietrich-Platz 1**
**W-7702 Gottmadingen (DE)**

(72) Erfinder : **von Allwörden, Wilhelm**
**Alpenstrasse 18**
**W-7704 Gailingen (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung betrifft einen mit einer landwirtschaftlichen Großballenpresse gewickelten, mit einer Umhüllung versehenen Rundballen aus Halmgut gemäß dem Oberbegriff der nebengeordneten Ansprüche 1 und 2.

Ein aus der GB-A-20 03 716 bekannter Rundballen wird in der Großballenpresse mittels einer darin vorgesehenen Einbindevorrichtung mit der Umhüllung versehen, nachdem der Wickelvorgang abgeschlossen ist. Dem Förderkanal, durch den das aufgenommene Halmgut in die Großballenpresse gebracht wird, ist ein Schneidwerk zugeordnet, das sich in den Förderkanal hineinschwenken läßt. Bei in den Förderkanal geschwenktem Schneidwerk wird das Halmgut in kleine Stücke geschnitten. Bleibt das Schneidwerk außerhalb des Förderkanals, so wird das Halmgut ungeschnitten verarbeitet. Im erstgenannten Fall läßt sich der fertige Rundballen nach Entfemen der Umhüllung manuell leicht auflösen. Allerdings besteht die Gefahr, daß sich der Rundballen unter sich ändernden Witterungsbedingungen oder auch bei mehrfachem Transport bzw. beim Aufeinanderstapeln ungewollt aufzulösen beginnt. Im zweitgenannten Fall werden die ungeschnittenen Halme des Halmguts miteinander verfilzt, so daß es nach dem Entfemen der Umhüllung zu Schwierigkeiten beim Auflösen des Rundballens kommt.

In einer Rundballenpresse gemäß US-A-46 77 807 wird der fertige Rundballen entweder nur mit einem Netz oder nur mit Bindergarn umwickelt, wobei die zum Aufbringen des Bindegarns vorgesehe Vorrichtung mitverwendet wird zum Aufbrigen des Netzes.

Aus der FR-A-24 57 636 ist es bekannt, den fertiggewickelten Rundballen durch kreuzweises Wickeln eines Brindegarns zu umhüllen.

Aus der EP-A-12 62 78 ist es bekannt, den fertiggewickelten Rundballen mit mindestens einem Netzstreifen zu umwickeln, dessen Enden sich selbsthaltend überlappen.

Der Erfindung liegt die Aufgabe zugrunde, einen Rundballen der eingangs genannten Art zu schaffen, der allen Witterungsbedingungen trotzt, der auch bei mehrfachem Transport seine Form unverändert beibehält, der mehrfach stapelbar ist, und der nach der Entfernung seiner Umhüllung manuell leicht auflösbar ist.

Die gestellte Aufgabe wird bei einem Rundballen der angegebenen Art mit den Merkmalen gemäß dem kennzeichnenden Teil von Anspruch 1 oder gemäß dem kennzeichnenden Teil von Anspruch 2 gelöst.

Ein derart ausgebildeter Rundballen ist besonders widerstandsfähig gegen Deformationen und Witterungseinflüsse, wobei die erste Lösung eine Mantelschicht aus ungeschnittenem Halmgut zur Erhöhung der Widerstandsfähigkeit aufweist, während bei der zweiten Lösung die spezielle doppelte Umhüllung die Widerstandsfähigkeit erhöht.

Der Rundballen 1 kann in einer nicht dargestellten Großballenpresse hergestellt werden, die eine aufklappbare Preßkammer aufweist. Zur Preßkammer führt eine Einlaßöffnung für das Halmgut. Ferner ist eine Bindeanordnung für den fertigen Rundballen vorgesehen. Das auf dem Boden liegende Halmgut wird mit einer Aufnahmevorrichtung mit einer zwischen der Aufnahmevorrichtung und der Einlaßöffnung angeordneten Fördertrommel aufgenommen, deren Länge der Breite des zu bildenden Rundballens entspricht. In einem Förderkanal zur Einlaßöffnung ist ein Schneidwerk vorgesehen, das eine Vielzahl von in ihrer Schneidstellung in den Förderkanal ragenden und in mindestens einer Reihe angeordneten, schwenkbar gelagerten Messern enthält. Die Messer sind mittels federbelasteter Messerhebel in ihrer Schneidstellung gehalten und entgegen der Federbelastung bis zu einer Stellung verschwenkbar, in der sie keine Schneidwirkung auf das Halmgut im Förderkanal ausüben.

Die Wickelvorrichtung der Großballenpresse sorgt dafür, daß nach Ausbildung des Rundballens aus dem Halmgut das Bindegarn 3 kreuzweise um den Rundballen 1 gewickelt wird, wobei z.B. an einem Ballenende begonnen wird, das Bindegarn dann spiralförmig entlang des Ballenmantels bis zu dessen anderem Ende läuft, und dann wieder zurück zum Ausgangsort gewickelt wird, so daß die Bindegarnwindungen einander überkreuzen. Alternativ kann auch anstelle des kreuzweise gewickelten Bindegarns eine Netzbahn aufgebracht werden, ehe der mit der Umhüllung versehene Rundballen ausgestoßen wird. Ferner können zur Erhöhung der Festigkeit der Umhüllung um den fertiggewickelten Rundballen aus kleingeschnittenem Halmgut sowohl eine Netzbahn als auch das kreuzweise gewickelte Bindegarn aufgebracht werden. Diese doppelte Umhüllung sorgt für eine große Stabilität des Rundballens, der nach Entfernen der Umhüllung leicht manuell auflösbar ist.

Beim Herstellen des Rundballens 1, dessen Inneres kurzgeschnittenes Halmgut aufweist und dessen äußeres aus wenigstens einer Mantelschicht aus ungeschnittenem Halmgut besteht und dessen Umhüllung eine Netzbahn 2 und/oder kreuzweise gewickeltes Bindegarn 3 ist, ist die Großballenpresse entweder mit einem Fühler für den Innendruck des Rundballens oder mit einer Meßvorrichtung für den Durchmesser des Rundballens versehen, der bzw. die nach Erreichen eines vorgegebenen Schwellwertes dafür sorgt, daß das Schneidwerk vollständig aus dem Förderkanal ausgeschwenkt wird, so daß mindestens die Letzte, d.h. die äußerste, Mantelschicht aus ungeschnittenem Halmgut gewickelt wird. Ein derartiger Rundballen ist besonders widerstandsfähig gegen Deformationen und Witterungseinflüsse.

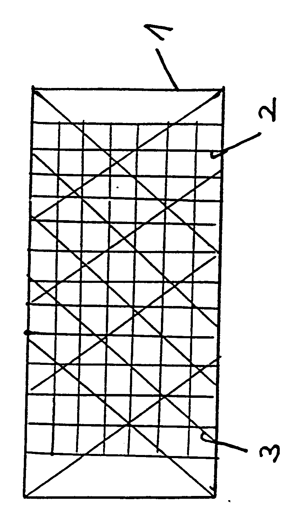

## Patentansprüche

1. Mit einer landwirtschaftlichen Großballenpresse gewickelter, mit einer Umhüllung versehener Rundballen aus Halmgut, wobei das Innere des Rundballens (1) aus in Halmlängsrichtung kleingeschnittenem Halmgut besteht, **dadurch gekennzeichnet**, daß das Äußere des Rundballens (1) aus mindestens einer Mantelschicht aus ungeschnittenem Halmgut besteht, und daß die Umhüllung aus kreuzweise um den Rundballen gewickeltem Bindegarn (3) und/oder aus einer Netzbahn (2) besteht.

2. Mit einer landwirtschaftlichen Großballenpresse gewickelter, mit einer Umhüllung versehener Rundballen aus in Halmlängsrichtung in kurze Stücke geschnittenem Halmgut, **dadurch gekennzeichnet**, daß die Umhüllung aus einer Netzbahn (2) und aus kreuzweise um den Rundballen (1) gewickelten Bindegarn (3) besteht.

## Claims

1. Round bale formed from straw material, which is wound by means of an agricultural big roll baler and is provided with a covering, the interior of the roll (1) being formed from straw material which has been cut short in the longitudinal direction of the straw, **characterised in that** the exterior of the roll (1) comprises at least one surface layer of uncut straw material, and in that the covering is formed from binding yarn (3), which is wound crosswisely around the roll, and/or a web of netting (2).

2. Round bale formed from straw material which has been cut into short pieces in the longitudinal direction of the straw, said roll being wound by means of an agricultural big roll baler and being provided with a covering, **characterised in that** the covering is formed from a web of netting (2) and from binding yarn (3), which Is wound crosswisely around the roll (1).

## Revendications

1. Balle ronde en matériau constitué de paille ou de brins de paille pourvue d'une enveloppe et roulée par une presse agricole à haute densité ou de grandes balles, l'intérieur de la balle ronde (1) étant composé de matériau constitué de paille coupée en petits morceaux dans le sens longitudinal du brin, **caractérisée en ce que** l'extérieur de la balle ronde (1) est constituée au moins d'une couche d'enveloppe en matériau constitué de paille non coupée, et que l'enveloppe est constituée d'une ficelle lieuse (3) enroulée en croix autour de la balle ronde et/ou d'une bande de filet (2).

2. Balle ronde pourvue d'une enveloppe et roulée au moyen d'une presse agricole à haute densité ou de grandes balles en matériau constitué de paille ou de brins de paille coupés en morceaux courts dans le sens longitudinal du brin, **caractérisée en ce que** l'enveloppe est constituée d'une bande de filet (2) et d'une ficelle lieuse (3) enroulée en croix autour de la balle ronde (1).